# EUROPEAN PATENT SPECIFICATION

(11) **EP 2 743 809 B1**
(45) Date of publication and mention of the grant of the patent: **12.02.2020**
(21) Application number: 12197083.4
(22) Date of filing: 13.12.2012
(51) Int. Cl.: G06F 3/046, G06F 3/0354

(54) **Stylus location utilizing multiple magnetometers**
Stiftlokalisierung mit mehreren Magnetometern
Localisation de stylet utilisant plusieurs magnétomètres

(43) Date of publication of application: 18.06.2014
(73) Proprietor: BlackBerry Limited, Waterloo, ON N2K 0A7 (CA)
(72) Inventor: Idzik, Jacek S., Waterloo, Ontario N2L 3W8 (CA); Mercea, Cornel, Waterloo, Ontario N2L 3W8 (CA)
(74) Representative: Vigand, Philippe

(56) References cited:
- EP-A1- 0 283 687
- WO-A1-02/43045
- WO-A1-2006/092154
- WO-A2-03/054682
- GB-A- 2 300 552
- US-A- 4 697 050
- US-A- 5 478 976
- US-A1- 2003 095 115
- US-A1- 2004 239 652
- US-A1- 2005 116 940
- US-A1- 2007 188 164
- US-A1- 2008 192 000
- US-A1- 2008 297 489
- US-A1- 2009 115 745
- US-A1- 2012 068 975
- US-A1- 2013 009 907
- US-B2- 9 262 033

## Description

### BACKGROUND

Stylus pointing devices enable information to be input to a host electronic device. When the tip of a stylus is placed in close proximity to a display surface of the host device, the position of the tip may be determined by the host by a variety of methods, including the effect of the stylus on the electrical properties of the tablet (i.e., via electromagnetic induction, changes in electrical resistance, electrical capacitance, and the like); the optical properties of the tablet; or by ultrasonic positioning.

One method for determining stylus location is to employ a grid of overlapping coils embedded in a surface of the host to sense an electromagnetic field generated by a transmitter in the stylus. Typically, one set of elongated coils extends in the horizontal (X) direction and another set of elongated coils extends in the vertical (Y) direction. The sensed electromagnetic field information is processed to yield a location.

Another method energizes the X- and Y-coils of the grid sequentially and senses the resulting voltage induced in a receiving coil of the stylus.

One disadvantage of these approaches is that a large number of coils is required to provide accurate location information.

A magnetometer is a sensing device that produces an output signal, such as voltage signal, in response to an applied magnetic field. Commonly, such devices utilize a Hall sensor, which senses the voltage difference produced across a current-carrying conductor in the presence of a magnetic field, or a magnetostrictive sensor. Magnetometers are responsive to the earth's magnetic field and may be employed as compasses.

The earth's magnetic field is altered by the presence of ferrous objects. Accordingly, variations in the earth's magnetic field may be employed to detect ferrous objects by moving one or more magnetometers across a region.

A single compass embedded in an electronic device may be employed to detect changes in a magnetic field caused by movement of a magnetic object, such as a magnetic ring or pen, around the device. This approach senses motion and may be used for gesture detection, but cannot be employed to sense location due to the interfering presence of magnetic fields produced by the electronic device and by the earth's magnetic field and because the magnetic field is dependent upon the orientation of the magnetic object with respect to the electronic device.

It would be useful to provide an alternative way to accurately sense the location of a stylus with respect to a host electronic device.

US 2004/0239652 disclose s a stylus that operates utilizing magnetic fields, wherein a permanent magnet is disposed within a passive stylus that is detectable by a plurality of magnetic sensors that remove the magnetic field to thereby obtain vectors that are used in a triangulation equation to determine the location of the stylus in two or three dimensions, depending upon the number of magnetic sensors that are used, wherein one set of magnetic sensors can be used as a reference for earth's magnetic field, and wherein each of the magnetic sensors includes a polarizing coil to change direction of sensitivity, a null coil and a flipping coil.

US 4,697,050 discloses a device for simultaneously effecting on the one hand, the plotting or erasing of graphical data on a material medium, and on the other hand, the recording or erasing of corresponding data in a computer memory.

GB 2 300 552 discloses a digitizer eraser system and method which are provided so as to include a writing/erasing digitizer pen, a tablet, and a tablet driver for use in conjunction with a computer and corresponding display screen.

US 2013/009907 A1 discloses a stylus comprising a magnetic field source when combined with a touch sensor provides for several input modes for an electronic device. Magnetometers in the electronic device may detect the presence, location, orientation, and angle of the magnet and thus the stylus. Presence of the magnetic field in conjunction with touches on the force sensitive touch sensor provides additional comparisons to distinguish whether a touch is from a human hand, a particular portion of a stylus, or other object.

### BRIEF DESCRIPTION OF THE DRAWINGS

Some example embodiments of the present disclosure will be described below with reference to the included drawings such that like reference numerals refer to like elements and in which:
**FIG. 1** is a diagram of a stylus and a host electronic device, in accordance with exemplary embodiments of the present disclosure;
**FIG. 2** is a diagram of a stylus, in accordance with exemplary embodiments of the present disclosure;
**FIG. 3** is a diagrammatic representation of the tip end of a stylus, in accordance with an exemplary embodiment of the disclosure;
**FIG. 4** is a block diagram of a stylus and a host electronic device, in accordance with illustrative embodiments of the present disclosure;
**FIG. 5** is a diagram illustrating a method for stylus location, in accordance with illustrative embodiments of the present disclosure; and
**FIG. 6** is a flow chart of a method for stylus location, in accordance with exemplary embodiments of the present disclosure.

### DETAILED DESCRIPTION

For simplicity and clarity of illustration, reference numerals may be repeated among the figures to indicate corresponding or analogous elements. Numerous details are set forth to provide an understanding of the illustrative embodiments described herein. The embodiments may be practiced without these details. In other instances, well-known methods, procedures, and components have not been described in detail to avoid obscuring the disclosed embodiments. The description is not to be considered as limited to the scope of the embodiments shown and described herein.

An aspect of the present disclosure relates the determination of stylus location by a host electronic device. In operation, a magnetic field generator of the stylus generates a magnetic field that is sensed by a first directional magnetometer of the electronic device and at least one second directional magnetometer of the electronic device. The stylus location is determined dependent upon the sensed magnetic fields.

In an exemplary embodiment, a host electronic device senses first magnetic vectors at two or more magnetometers of the host electronic device, the first magnetic field vectors dependent in part upon a first magnetic field of a stylus,_senses second magnetic vectors at the two or more magnetometers of the host electronic device, the second magnetic field vectors dependent in part upon a second magnetic field of the stylus, and determines the location of a stylus with respect to the host electronic device dependent upon the first and second magnetic field vectors. The measurement of two or more magnetic fields enables compensation for the background magnetic field of the host electronic device and the magnetic field of the Earth.

The host electronic device may cooperate with the stylus such that the first magnetic field of the stylus is a zero magnetic field and the second magnetic field of the stylus is a non-zero magnetic field, and then determine the location of the stylus with respect to the host electronic device dependent upon a difference between the first and second magnetic field vectors in order to compensate for a background magnetic field.

Alternatively, the host electronic device may cooperate with the stylus such that the first magnetic field of the stylus is opposite in polarity to the second magnetic field of the stylus and determine the location of the stylus with respect to the host electronic device dependent upon a difference between the first and second magnetic field vectors so as to compensate for the background magnetic field.

Cooperation between the host electronic device and the stylus may be achieved by using a communication circuit of the host electronic device to communicate with a control circuit of the stylus that controls an electric current in the coil of the stylus. Operation may be initiated by either the host electronic device or the stylus.

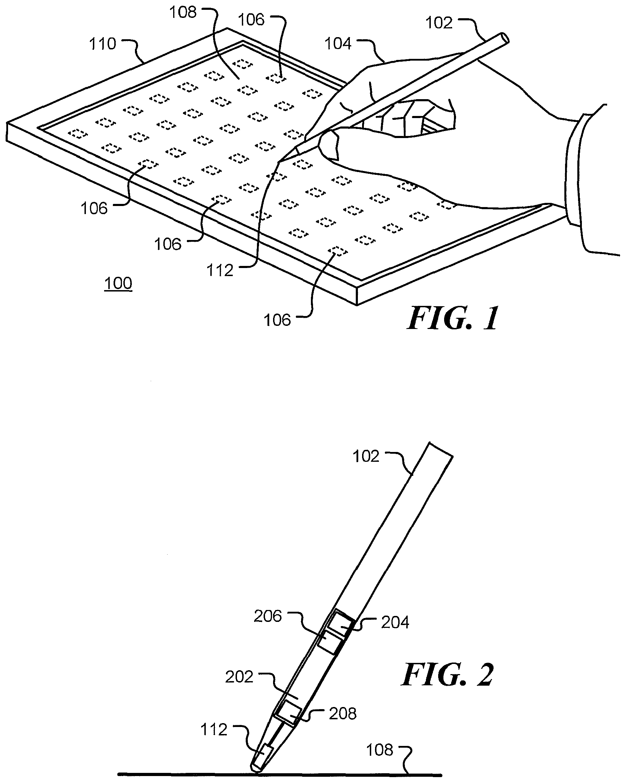

An example of an exemplary embodiment is depicted in **FIG. 1****.** In **FIG. 1****,** a stylus 102 is of a user 104 interacts with a display screen 108 of a host electronic device 110. The host electronic device 110 may be a smart-phone, personal digital assistant (PDA), portable computer, tablet computer or any device utilizing a graphical user interface, for example. The magnetometers 106 are located in close proximity of the screen 108 and are used to sense a magnetic field produced by a magnetic field generator 112 of the stylus 102. The magnetic field generator 112 may be an electromagnet, for example.

Two or more magnetometers 106 may be used and may be configured in an array pattern, as depicted in **FIG. 1****.** In an exemplary embodiment, a rectangular array of Hall sensors is employed. Such arrays may be constructed using a CMOS process, for example.

**FIG. 2** is a diagram of a stylus, in accordance with some embodiments of the present disclosure. The stylus 102 includes a magnetic field generator 112, such as a coil or electromagnetic, and a control circuit 202. The control circuit 202 is operable to couple an electric current to the magnetic field generator 112. The control circuit 202 also includes a power supply 204, such as a battery, a communication module 206 for communication with a host electronic device and a contact sensor 208, then senses when the tip of the stylus is in contact with the screen of the electronic device. The contact sensor 208 may be a force sensor, for example, that senses a force applied to the tip of the stylus when it is pressed against the display 108 of a host electronic device. The magnetic field generator 112 generates a magnetic field that may be sensed by magnetometers in the host electronic device.

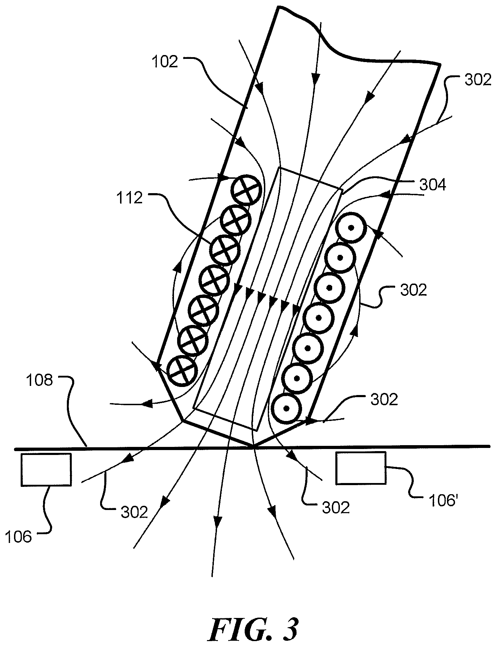

**FIG. 3** is a diagrammatic representation of the tip end of a stylus 102, in accordance with an exemplary embodiment of the disclosure. The stylus houses a magnetic field generator 112. In this embodiment, the magnetic field generator 112 comprises a cylindrically wound coil. Optionally, the coil may surround, or be in close proximity to, a core of ferrous material 304. A ferrous core has a much higher magnetic permeability than air and strengthens the magnetic field. When an electric current is passed through the coil, an electromagnetic field is generated as indicated by the electromagnetic field lines 302. The arrows on the field lines 302 indicate the orientation or direction of the magnetic field. In accordance with known conventions, the crosses on the coil 112 indicate current flow into the page, while the dots indicate current flow out of the page. In the illustrative embodiment shown, the tip of the stylus 102 is in contact with the surface of a screen 108 on an electronic device. Two magnetometers, 106 and 106', are located in proximity to the screen 108 and are operable detect the magnetic field 302. In this embodiment, the magnetic field lines are oriented away from the tip the stylus. Measurement of the magnetic field at the magnetometers 106 and 106' may be employed to determine the location of the magnetic field generator 112 at the tip of the stylus 102.

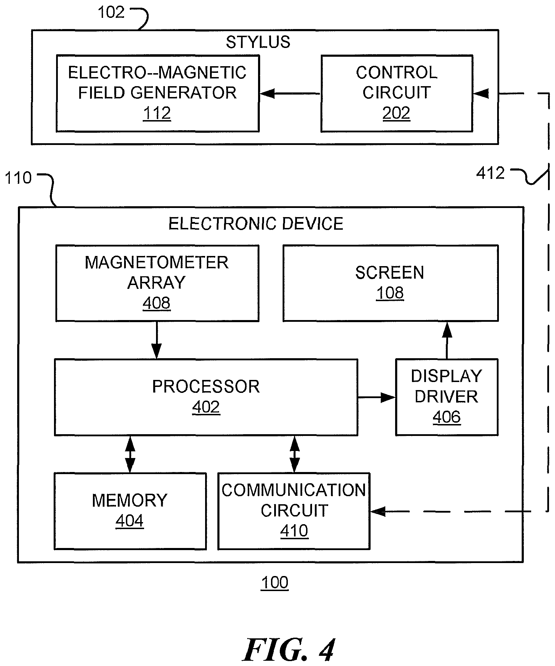

**FIG. 4** is a block diagram of a stylus and host electronic device, in accordance with exemplary embodiments of the present disclosure. The host electronic device 110 includes a processor 402 coupled to a memory 404. The processor 402 is also coupled to a display driver 406 that is used to render images on a screen 108. The memory 404 may be used to store an operating system and various user applications that may be executed on the processor 402. The operating system and user applications control the processor to display elements of a graphical user interface on the screen 108. The stylus 102 may be used by a user to interact with the displayed graphical user interface to provide input to the operating system or other user applications executed on the processor 402.

As discussed above, the stylus 102 includes a magnetic field generator 112, such as a coil or electromagnet. The magnetic field generator 112 is controlled by control circuit 202 of the stylus. In particular, the control circuit may be used to switch an electric current to the magnetic field generator 112 or to control the direction of the electric current.

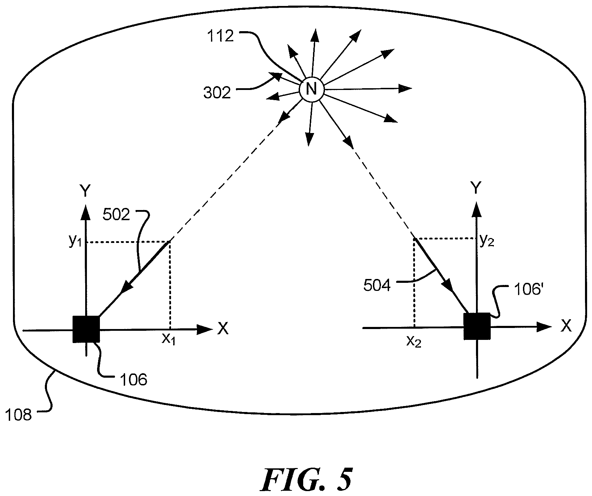

**FIG. 5** shows how two directional magnetometers, 106 and 106', of a host electronic device may be employed to determine a location of the magnetic field generator 112. In this example, the magnetic field generator 112 of the stylus produces a magnetic field 302 that is substantially radial, although other magnetic field patterns may be used. The first directional magnetometer 106 senses a first magnetic field vector 502 comprising first components (x₁,y₁) in the plane of the screen 108. A second directional magnetometer 106' senses a second magnetic field vector 504 comprising components (x₂,y₂) of the magnetic field in the plane of the screen 108. Since the locations of the magnetometers 106 and 106' are known, a simple geometric triangulation may be used to determine the location of the magnetic field generator 112 with respect to the screen 108 of the electronic device. Determination of the location may be made by the processor under software control.

Additional magnetometers may be employed to enable to stylus location to be determined more accurately. The number of magnetometers used may range from as few as two or three to as large as hundreds or thousands. The magnetometers may be arranged in a rectangular grid, as depicted in **FIG. 1****.**

Optionally, three or more magnetometers may be used, each sensing three components of the magnetic field. This enables the stylus to be located in three-dimensions.

When an energized coil of a stylus is held in close proximity to the array and the magnetometers are polled for direction of the field, their directions will point to the location in space where the field originates, thus giving a 3D location of the stylus tip.

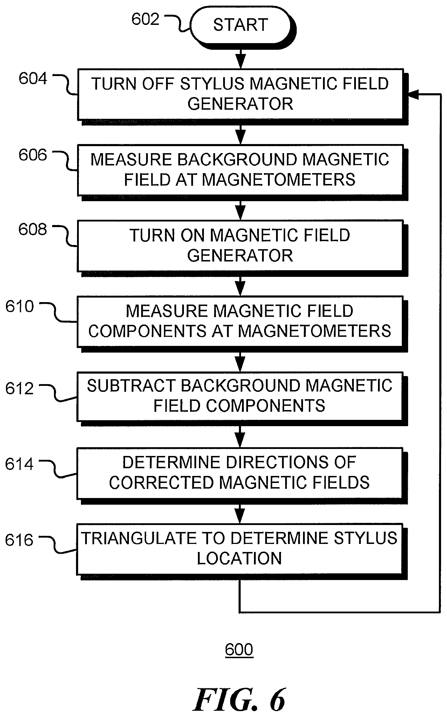

**FIG. 6** is a flow chart 600 of a method for stylus location, in accordance with embodiments of the present disclosure. The magnetic field sensed by the magnetometers is a combination of the ambient, or background, magnetic field and the field generated by the stylus. The background magnetic field includes the magnetic field of the Earth, which varies dependent upon the orientation of the host electronic device, and stray electromagnetic fields produced by operation of the host electronic device. Following start block 602 in **FIG. 6****,** the magnetic field generator of the stylus is turned off at block 604. This enables components of the background magnetic field to be measured at block 606 using the magnetometers. This measurement is stored. The magnetic generator of the stylus is activated at block 608, enabling a combination of the stylus magnetic field and the background magnetic field to be measured at block 610. The corrected magnetic field, due to the stylus alone, is found at block 612 by subtracting the background magnetic field measurement from the activated measurement to find the differences in the measurements. At block 614, the directions of the magnetic field are determined from the corrected components, and the stylus location is determined at block 616. The locations may be found by triangulation, for example. Correcting for the background magnetic field improves the accuracy of the stylus location.

Variations of this approach will be apparent to those of ordinary skill in the art. For example, an average of the background magnetic field measurements before and after the activated measurement may be subtracted to better account for variations in the background magnetic field as the stylus moves. As another example, the background magnetic field at the time of the activated measurement may be predicated from prior or post measurements of the background magnetic field and measurements of stylus motion.

In an alternative embodiment, the magnetic field generator is activated in a first polarity to obtain a first measurement and then in a reverse polarity to obtain a second measurement. Again, the magnetic field due to the stylus alone may be determined from the difference between the first and second measurements.

The implementations of the present disclosure described above are intended to be merely exemplary. It will be appreciated by those of skill in the art that alterations, modifications and variations to the illustrative embodiments disclosed herein may be made without departing from the scope of the present disclosure. Moreover, selected features from one or more of the above-described illustrative embodiments may be combined to create alternative embodiments not explicitly shown and described herein.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The present disclosure may be embodied in other specific forms without departing from its essential characteristics. The described exemplary embodiments are to be considered in all respects only as illustrative and not restrictive. The scope of the disclosure is defined by the appended claims.

## Claims

1. An electronic device (110) comprising:
a first directional magnetometer (106), operable to sense a first magnetic field vector comprising two or more first components of a magnetic field (302) produced by an electromagnetic field generator (112) in proximity to the electronic device (110), the electromagnetic field generator located in a stylus (102);
at least one second directional magnetometer (106'), operable to sense at least one second magnetic field vector comprising two or more components of the magnetic field (302) produced by the electromagnetic field generator (112);
a processor (402) coupled to the first and second directional magnetometers and responsive to the first magnetic field vector and the at least one second magnetic field vector, the processor (402) operable to determine a location of the electromagnetic field generator (112) with respect to the electronic device (110) ; and
a communication circuit (410) operable to communicate with a control circuit (202) of the stylus (102) that controls an electric current supplied to the electromagnetic field generator (112) of the stylus (102) and wherein the host electronic device cooperates with the stylus such that the first magnetic field of the stylus is opposite in polarity to the second magnetic field of the stylus and determines the location of the stylus with respect to the host electronic device dependent upon a difference between the first and second magnetic field vectors so as to compensate for the background magnetic field.

2. The electronic device of claim 1, wherein the processor (402) is further operable to:
determine a first magnetic field comprising the first magnetic field vector and the at least one second magnetic field vector sensed when the electromagnetic field generator (112) is inactive; and
determine a second magnetic field comprising the first magnetic field vector and the at least one second magnetic field vector sensed when the electromagnetic field generator (112) is active,
and where the processor (402) is responsive to a difference between the second magnetic field and the first magnetic field to determine the location of the electromagnetic field generator (112) with respect to the electronic device (110).

3. The electronic device of claim 1, further comprising a screen (108), where the first directional magnetometer (106) and the at least one second directional magnetometer (106') comprise an array of magnetometers (408) aligned with and in close proximity to the screen (108).

4. The electronic device of claim 1, where the first directional magnetometer (106) comprises a magnetometer having at least two axes.

5. The electronic device of claim 4, where the electronic device is configured to communicate a stylus (102) wherein the electromagnetic field generator (112) comprises a coil located in close proximity to a ferrous body.

6. The electronic device of claim 4, where the electronic device is configured to communicate a stylus (102) wherein the control circuit (202) is responsive to a communication signal received from the communication module (206) and where the communication module (206) is operable to communicate a state of the control circuit (202) to the electronic device (110).

7. The electronic device of claim 4, the electronic device is configured to communicate a stylus (102) that comprises:
a contact sensor (208) operable to sense when a tip of the stylus (102) is in contact with a screen (108) of the electronic device (110),
where the communication module (206) is operable to communicate to the electronic device (110) when the tip of the stylus (102) is in contact with the screen (108) of the electronic device (110).

8. A method for determining a location of a stylus (102) relative to a host electronic device (110) in accordance to claim 1, comprising:
activating an electromagnet (112) of the stylus using a control circuit (202) of the stylus (102) to control an electric current supplied to the electromagnet to alternately provide a first magnetic field in a first polarity and a second magnetic field in a second polarity opposite the first polarity;
sensing the first magnetic field at two or more magnetometers (106, 106') of the host electronic device (110); and
determining the location of the stylus (102) with respect to the host electronic device (110) dependent upon the first magnetic field, the method further comprising:
sensing the second magnetic field at two or more magnetometers (106, 106') of the host electronic device (110),
where determining the location of the stylus (102) with respect to the host electronic device (110) is dependent upon a difference between the first and second magnetic fields.

9. The method of claim 8, further comprising:
energizing the electromagnet (112) of the stylus (102) in a first polarity when the first magnetic field is sensed;
energizing the electromagnet (112) of the stylus (102) in a second polarity, opposite to the first polarity, when the first magnetic field is sensed; and
determining the location of the stylus (102) with respect to the host electronic device dependent upon a difference between the first and second magnetic fields.

10. The method of claim 8, where determining the location of the stylus (102) with respect to the host electronic device (110) comprises:
determining directions of the first magnetic field at the two or more magnetometers (106, 106').

11. A system (100) comprising:
a stylus (102) comprising:
an electromagnetic field generator (112);
a control circuit (202) operable to provide an electric current to the electromagnetic field generator (112); and
a communication module (206) operatively coupled to the control circuit (202); and
a host electronic device (110) comprising:
a first directional magnetometer (106), operable to sense a first magnetic field vector comprising two or more first components of a magnetic field (302) produced by the electromagnetic field generator (112) of the stylus (102);
at least one second directional magnetometer (106'), operable to sense at least one second magnetic field vector comprising two or more components of the magnetic field (302) produced by the electromagnetic field generator (112) of the stylus (102);
a processor (402) coupled to the first and second directional magnetometers (106, 106') and responsive to the first magnetic field vector and the at least one second magnetic field vector, the processor operable to determine a location of the electromagnetic field generator (112) of the stylus (102) with respect to the electronic device (110); and
a communication circuit (410) operable to communicate with a control circuit (202) of the stylus (102) that controls an electric current supplied to the electromagnetic field generator (112) of the stylus (102) and wherein the host electronic device cooperates with the stylus such that the first magnetic field of the stylus is opposite in polarity to the second magnetic field of the stylus and determines the location of the stylus with respect to the host electronic device dependent upon a difference between the first and second magnetic field vectors so as to compensate for the background magnetic field.

## Patentansprüche

1. Elektronische Vorrichtung (110), die Folgendes umfasst:
ein erstes Richtmagnetometer (106), das betreibbar ist, einen ersten Magnetfeldvektor zu erfassen, der zwei oder mehr erste Komponenten eines Magnetfelds (302) umfasst, das von einem Elektromagnetfelderzeuger (112) in der Nähe einer elektronischen Vorrichtung (110) produziert wird, wobei sich der Elektromagnetfelderzeuger in einem Eingabestift (102) befindet;
mindestens ein zweites Richtmagnetometer (106'), das betreibbar ist, mindestens einen zweiten Magnetfeldvektor zu erfassen, der zwei oder mehr Komponenten des Magnetfelds (302) umfasst, das vom Elektromagnetfelderzeuger (112) produziert wird;
einen Prozessor (402), der an das erste und das zweite Richtmagnetometer gekoppelt ist und auf den ersten Magnetfeldvektor und den mindestens einen zweiten Magnetfeldvektor anspricht, wobei der Prozessor (402) betreibbar ist, eine Lage des Elektromagnetfelderzeugers (112) mit Bezug auf die elektronische Vorrichtung (110) zu bestimmen; und
eine Kommunikationsschaltung (410), die betreibbar ist, mit einer Steuerschaltung (202) des Eingabestifts (102), der einen elektrischen Strom steuert, der dem Elektromagnetfelderzeuger (112) des Eingabestifts (102) zugeführt wird, zu kommunizieren, und wobei die elektronische Hostvorrichtung mit dem Eingabestift derart zusammenwirkt, dass die Polarität des ersten Magnetfelds des Eingabestifts dem zweiten Magnetfeld des Eingabestifts entgegengesetzt ist, und die Lage des Eingabestifts mit Bezug auf die elektronische Hostvorrichtung in Abhängigkeit von einer Differenz zwischen dem ersten und dem zweiten Magnetfeldvektor bestimmt, um das Hintergrundmagnetfeld zu kompensieren.

2. Elektronische Vorrichtung nach Anspruch 1, wobei der Prozessor (402) ferner zu Folgendem betreibbar ist:
Bestimmen eines ersten Magnetfelds, das den ersten Magnetfeldvektor und den mindestens einen zweiten Magnetfeldvektor umfasst, die erfasst werden, wenn der Elektromagnetfelderzeuger (112) inaktiv ist; und
Bestimmen eines zweiten Magnetfelds, das den ersten Magnetfeldvektor und den mindestens einen zweiten Magnetfeldvektor umfasst, die erfasst werden, wenn der Elektromagnetfelderzeuger (112) aktiv ist,
und wo der Prozessor (402) auf eine Differenz zwischen dem zweiten Magnetfeld und dem ersten Magnetfeld anspricht, um die Lage des Elektromagnetfelderzeugers (112) mit Bezug auf die elektronische Vorrichtung (110) zu bestimmen.

3. Elektronische Vorrichtung nach Anspruch 1, die ferner einen Bildschirm (108) umfasst, wo das erste Richtmagnetometer (106) und das mindestens eine zweite Richtmagnetometer (106') ein Array von Magnetometern (408) umfassen, die auf den Bildschirm (108) ausgerichtet sind und sich in dessen Nähe befinden.

4. Elektronische Vorrichtung nach Anspruch 1, wo das erste Richtmagnetometer (106) ein Magnetometer umfasst, das mindestens zwei Achsen aufweist.

5. Elektronische Vorrichtung nach Anspruch 4, wo die elektronische Vorrichtung dazu ausgelegt ist, mit einem Eingabestift (102) zu kommunizieren, wobei der Elektromagnetfelderzeuger (112) eine Spule umfasst, die sich in großer Nähe zu einem Eisenkörper befindet.

6. Elektronische Vorrichtung nach Anspruch 4, wo die elektronische Vorrichtung dazu ausgelegt ist, mit einem Eingabestift (102) zu kommunizieren, wobei die Steuerschaltung (202) auf ein Kommunikationssignal anspricht, das vom Kommunikationsmodul (206) empfangen wird, und wo das Kommunikationsmodul (206) betreibbar ist, einen Zustand der Steuerschaltung (202) zur elektronischen Vorrichtung (110) zu kommunizieren.

7. Elektronische Vorrichtung nach Anspruch 4, die elektronische Vorrichtung ist dazu ausgelegt, mit einem Eingabestift (102) zu kommunizieren, der Folgendes umfasst:
einen Kontaktsensor (208), der betreibbar ist zu erfassen, wenn eine Spitze des Eingabestifts (102) mit einem Bildschirm (108) der elektronischen Vorrichtung (110) in Kontakt ist,
wo das Kommunikationsmodul (206) betreibbar ist, der elektronischen Vorrichtung (110) zu kommunizieren, wenn die Spitze des Eingabestifts (102) mit dem Bildschirm (108) der elektronischen Vorrichtung (110) in Kontakt ist.

8. Verfahren zum Bestimmen einer Lage eines Eingabestifts (102) relativ zu einer elektronischen Hostvorrichtung gemäß Anspruch 1, das Folgendes umfasst:
Aktivieren eines Elektromagneten (112) des Eingabestifts unter Verwendung einer Steuerschaltung (202) des Eingabestifts (102), um einen elektrischen Strom zu steuern, der dem Elektromagneten zugeführt wird, um abwechselnd ein erstes Magnetfeld einer ersten Polarität und ein zweites Magnetfeld einer zweiten Polarität, die der ersten Polarität entgegengesetzt ist, bereitzustellen;
Erfassen des ersten Magnetfelds an zwei oder mehr Magnetometern (106, 106') der elektronischen Hostvorrichtung (110); und
Bestimmen der Lage des Eingabestifts (102) mit Bezug auf die elektronische Hostvorrichtung (110) in Abhängigkeit vom ersten Magnetfeld, wobei das Verfahren ferner Folgendes umfasst:
Erfassen des zweiten Magnetfelds an zwei oder mehr Magnetometern (106, 106') der elektronischen Hostvorrichtung (110),
wo das Bestimmen der Lage des Eingabestifts (102) mit Bezug auf die elektronische Hostvorrichtung (110) von einer Differenz zwischen dem ersten und dem zweiten Magnetfeld abhängig ist.

9. Verfahren nach Anspruch 8, das ferner Folgendes umfasst:
Energetisieren des Elektromagneten (112) des Eingabestifts (102) einer ersten Polarität, wenn das erste Magnetfeld erfasst wird;
Energetisieren des Elektromagneten (112) des Eingabestifts (102) einer zweiten Polarität, die der ersten Polarität entgegengesetzt ist, wenn das erste Magnetfeld erfasst wird; und
Bestimmen der Lage des Eingabestifts (102) mit Bezug auf die elektronische Hostvorrichtung in Abhängigkeit von einer Differenz zwischen dem ersten und dem zweiten Magnetfeld.

10. Verfahren nach Anspruch 8, wo das Bestimmen der Lage des Eingabestifts (102) mit Bezug auf die elektronische Hostvorrichtung (110) Folgendes umfasst:
Bestimmen von Richtungen des ersten Magnetfelds an den zwei oder mehr Magnetometern (106, 106').

11. System (100), das Folgendes umfasst:
einen Eingabestift (102), der Folgendes umfasst:
einen Elektromagnetfelderzeuger (112);
eine Steuerschaltung (202), die betreibbar ist, dem Elektromagnetfelderzeuger (112) einen elektrischen Strom bereitzustellen; und
ein Kommunikationsmodul (206), das an die Steuerschaltung (202) wirkgekoppelt ist; und
eine elektronische Hostvorrichtung (110), die Folgendes umfasst:
ein erstes Richtmagnetometer (106), das betreibbar ist, einen ersten Magnetfeldvektor zu erfassen, der zwei oder mehr erste Komponenten eines Magnetfelds (302) umfasst, das vom Elektromagnetfelderzeuger (112) des Eingabestifts (102) produziert wird;
mindestens ein zweites Richtmagnetometer (106'), das betreibbar ist, mindestens einen zweiten Magnetfeldvektor zu erfassen, der zwei oder mehr Komponenten des Magnetfelds (302) umfasst, das vom Elektromagnetfelderzeuger (112) des Eingabestifts (102) produziert wird;
einen Prozessor (402), der an das erste und das zweite Richtmagnetometer (106, 106') gekoppelt ist und auf den ersten Magnetfeldvektor und den mindestens einen zweiten Magnetfeldvektor anspricht, wobei der Prozessor betreibbar ist, eine Lage des Elektromagnetfelderzeugers (112) des Eingabestifts (102) mit Bezug auf die elektronische Vorrichtung (110) zu bestimmen; und
eine Kommunikationsschaltung (410), die betreibbar ist, mit einer Steuerschaltung (202) des Eingabestifts (102), der einen elektrischen Strom steuert, der dem Elektromagnetfelderzeuger (112) des Eingabestifts (102) zugeführt wird, zu kommunizieren, und wobei die elektronische Hostvorrichtung mit dem Eingabestift derart zusammenwirkt, dass die Polarität des ersten Magnetfelds des Eingabestifts dem zweiten Magnetfeld des Eingabestifts entgegengesetzt ist, und die Lage des Eingabestifts mit Bezug auf die elektronische Hostvorrichtung in Abhängigkeit von einer Differenz zwischen dem ersten und dem zweiten Magnetfeldvektor bestimmt, um das Hintergrundmagnetfeld zu kompensieren.

## Revendications

1. Dispositif électronique (110) comprenant :
un premier magnétomètre directionnel (106) permettant de détecter un premier vecteur champ magnétique comprenant deux premières composantes ou plus d'un champ magnétique (302) produit par un générateur de champ électromagnétique (112) à proximité du dispositif électronique (110), le générateur de champ électromagnétique se trouvant dans un stylet (102) ;
au moins un second magnétomètre directionnel (106') permettant de détecter au moins un second vecteur champ magnétique comprenant deux composantes ou plus du champ magnétique (302) produit par le générateur de champ électromagnétique (112) ;
un processeur (402) couplé aux premier et second magnétomètres directionnels et réagissant au premier vecteur champ magnétique et au au moins un second vecteur champ magnétique, le processeur (402) permettant de déterminer un emplacement du générateur de champ électromagnétique (112) par rapport au dispositif électronique (110) ; et
un circuit de communication (410) permettant de communiquer avec un circuit de commande (202) du stylet (102), qui commande un courant électrique fourni au générateur de champ électromagnétique (112) du stylet (102) et dans lequel le dispositif électronique hôte coopère avec le stylet de manière que le premier champ magnétique du stylet soit de polarité opposée à celle du second champ magnétique du stylet et détermine l'emplacement du stylet par rapport au dispositif électronique hôte en fonction d'une différence entre les premier et second vecteurs champs magnétiques, de façon à compenser le champ magnétique de fond.

2. Dispositif électronique selon la revendication 1, dans lequel le processeur (402) permet en outre de :
déterminer un premier champ magnétique comprenant le premier vecteur champ magnétique et le au moins un second vecteur champ magnétique détecté lorsque le générateur de champ électromagnétique (112) est inactif ; et
déterminer un second champ magnétique comprenant le premier vecteur champ magnétique et le au moins un second vecteur champ magnétique détecté lorsque le générateur de champ électromagnétique (112) est actif,
et dans lequel le processeur (402) réagit à une différence entre le second champ magnétique et le premier champ magnétique pour déterminer l'emplacement du générateur de champ électromagnétique (112) par rapport au dispositif électronique (110).

3. Dispositif électronique selon la revendication 1, comprenant en outre un écran (108), dans lequel le premier magnétomètre directionnel (106) et le au moins un second magnétomètre directionnel (106') comprennent un réseau de magnétomètres (408) alignés avec l'écran (108) et à proximité immédiate de celui-ci.

4. Dispositif électronique selon la revendication 1, dans lequel le premier magnétomètre directionnel (106) comprend un magnétomètre ayant au moins deux axes.

5. Dispositif électronique selon la revendication 4, dans lequel le dispositif électronique est conçu pour :
communiquer avec un stylet (102), dans lequel le générateur de champ électromagnétique (112) comprend une bobine située à proximité immédiate d'un corps ferreux.

6. Dispositif électronique selon la revendication 4, dans lequel le dispositif électronique est conçu pour :
communiquer avec un stylet (102), dans lequel le circuit de commande (202) réagit à un signal de communication reçu en provenance du module de communication (206) et dans lequel le module de communication (206) permet de communiquer un état du circuit de commande (202) au dispositif électronique (110).

7. Dispositif électronique selon la revendication 4, le dispositif électronique est conçu pour :
communiquer avec un stylet (102) qui comprend :
un capteur de contact (208) permettant de détecter quand une pointe du stylet (102) est au contact d'un écran (108) du dispositif électronique (110),
dans lequel le module de communication (206) permet de communiquer au dispositif électronique (110) quand la pointe du stylet (102) est au contact de l'écran (108) du dispositif électronique (110).

8. Procédé de détermination d'un emplacement de stylet (102) par rapport à un dispositif électronique hôte (110) en conformité avec la revendication 1, comprenant les étapes suivantes :
activer un électro-aimant (112) du stylet à l'aide d'un circuit de commande (202) du stylet (102) pour commander un courant électrique alimentant l'électro-aimant afin de fournir en alternance un premier champ magnétique dans une première polarité et un second champ magnétique dans une seconde polarité opposée à la première polarité ;
détecter le premier champ magnétique au niveau de deux magnétomètres ou plus (106, 106') du dispositif électronique hôte (110) ; et
déterminer l'emplacement du stylet (102) par rapport au dispositif électronique hôte (110) en fonction du premier champ magnétique, le procédé comprenant en outre l'étape suivante :
détecter le second champ magnétique au niveau de deux magnétomètres ou plus (106, 106') du dispositif électronique hôte (110),
dans lequel la détermination de l'emplacement du stylet (102) par rapport au dispositif électronique hôte (110) est fonction d'une différence entre les premier et second champs magnétiques.

9. Procédé selon la revendication 8, comprenant en outre les étapes suivantes :
exciter l'électro-aimant (112) du stylet (102) dans une première polarité lorsque le premier champ magnétique est détecté ;
exciter l'électro-aimant (112) du stylet (102) dans une seconde polarité, opposée à la première polarité, lorsque le premier champ magnétique est détecté ; et
déterminer l'emplacement du stylet (102) par rapport au dispositif électronique hôte en fonction d'une différence entre les premier et second champs magnétiques.

10. Procédé selon la revendication 8, dans lequel la détermination de l'emplacement du stylet (102) par rapport au dispositif électronique hôte (110) comprend l'étape suivante :
déterminer les directions du premier champ magnétique au niveau des deux magnétomètres ou plus (106, 106').

11. Système (100) comprenant :
un stylet (102) comprenant :
un générateur de champ électromagnétique (112) ;
un circuit de commande (202) permettant de fournir un courant électrique au générateur de champ électromagnétique (112) ; et
un module de communication (206) couplé fonctionnellement au circuit de commande (202) ; et
un dispositif électronique hôte (110) comprenant :
un premier magnétomètre directionnel (106) permettant de détecter un premier vecteur champ magnétique comprenant deux premières composantes ou plus d'un champ magnétique (302) produit par le générateur de champ électromagnétique (112) du stylet (102) ;
au moins un second magnétomètre directionnel (106') permettant de détecter au moins un second vecteur champ magnétique comprenant deux composantes ou plus du champ magnétique (302) produit par le générateur de champ électromagnétique (112) du stylet (102) ;
un processeur (402) couplé aux premier et second magnétomètres directionnels (106, 106') et réagissant au premier vecteur champ magnétique et au au moins un second vecteur champ magnétique, le processeur permettant de déterminer un emplacement du générateur de champ électromagnétique (112) du stylet (102) par rapport au dispositif électronique (110) ; et
un circuit de communication (410) permettant de communiquer avec un circuit de commande (202) du stylet (102), qui commande un courant électrique alimentant le générateur de champ électromagnétique (112) du stylet (102) et dans lequel le dispositif électronique hôte coopère avec le stylet de manière que le premier champ magnétique du stylet soit de polarité opposée à celle du second champ magnétique du stylet et détermine l'emplacement du stylet par rapport au dispositif électronique hôte en fonction d'une différence entre les premier et second vecteurs champs magnétiques, de façon à compenser le champ magnétique de fond.
